# EUROPEAN PATENT SPECIFICATION

(11) **EP 2 939 431 B1**
(45) Date of publication and mention of the grant of the patent: **25.04.2018**
(21) Application number: 13801847.8
(22) Date of filing: 30.10.2013
(51) Int. Cl.: H04N 21/231, H04N 21/254, H04N 21/658, H04N 21/6547, H04N 21/438, H04N 21/433, H04N 21/462, H04N 21/262, H04N 21/482

(54) **INFORMATION PROCESSING APPARATUS AND METHOD TO GENERATE A PROGRAM GUIDE**
INFORMATIONSVERARBEITUNGSVORRICHTUNG UND VERFAHREN ZUR ERZEUGUNG EINES PROGRAMMFÜHRERS
APPAREIL DE TRAITEMENT D'INFORMATION ET PROCÉDÉ DESTINÉ À GÉNÉRER UN GUIDE DE PROGRAMME

(30) Priority: 27.12.2012 JP 2012285028
(43) Date of publication of application: 04.11.2015
(73) Proprietor: Saturn Licensing LLC, New York, NY 10022-3211 (US)
(72) Inventor: HASHIMOTO, Sadatsugu, Tokyo 108-0075 (JP); TANOUE, Ayumu, Tokyo 108-0075 (JP); YUKI, Taichi, Tokyo 108-0075 (JP); KAWADA, Masato, Tokyo 108-0075 (JP); ANZAI, Tetsunoshin, Tokyo 108-0075 (JP); MASUNAGA, Shinya, Tokyo 108-0075 (JP)
(74) Representative: Witte, Weller & Partner Patentanwälte mbB
(86) International application number: PCT/JP2013/006423
(87) International publication number: WO 2014/103124

(56) References cited:
- EP-A1- 2 107 704
- EP-A2- 0 858 223
- US-A1- 2005 283 799
- US-A1- 2009 064 223

## Description

### [Technical Field]

The present disclosure relates to an information processing apparatus, a receiving apparatus and an information processing method.

The present disclosure contains subject matter related to that disclosed in Japanese Priority Patent Application JP 2012-285028 filed in the Japan Patent Office on December 27, 2012.

### [Background Art]

For example, EPG (Electronic Program Guide) which can be used in a so-called mobile device such as a mobile phone, smart phone and tablet type device appears.

Moreover, a technique related to a server that associates a content display apparatus and an operation apparatus and manages an operation has been developed. As a technique related to the above-mentioned server, for example, there is a technique described in following JP 2009-159188A.

### [Citation List]

### [Patent Literature]

[PTL 1]
JP 2009-159188A

US 2005/283799 A1 discloses a system for localizing an EPG program schedule, including an EPG service provider station including a database of channels and corresponding EPG program schedule information, a database manager identifying a plurality of channel line-ups potentially receivable at a viewing location, a transmitter, and a receiver, a multimedia viewer situated at the viewing location including an automatic channel line-up identifier identifying a first line-up of television channels receivable at the viewing location, a channel line-up processor at the viewing location calculating a channel line-up from among the plurality of channel line-ups that substantially matches the first line-up, a receiver receiving from the EPG service provider station the plurality of channel line-ups,; and a transmitter transmitting to the EPG service provider station the identifier of the channel line-up calculated by the channel line-up processor, and a network connection linking the multimedia viewer to the EPG service provider, wherein the EPG service provider station transmitter transmits to the multimedia viewer the plurality of channel line-ups and also transmits to the multimedia viewer EPG program schedule information localized to the viewing location and based on the identifier of the channel line-up calculated by the channel line-up processor, and wherein the EPG service provider station receiver receives from the multimedia viewer the identifier of the calculated channel line-up, and wherein the multimedia viewer receiver also receives from the EPG service provider station the EPG program schedule information.

EP 0858223 A2 discloses a method and apparatus for requesting, receiving, processing, and providing information from a single source to a television viewer. An information provider is accessed via a communications link and specific data, which is separate and distinct from video signals received by the television receiver, is downloaded to the television receiver. The data provided by the information provider is database information with minimal formatting and does not contain any graphical overhead. Requests for information from the information provider may be on demand or at a predetermined time. The information provided may be filtered by the information provider and/or television receiver based on selected program categories and/or a user provided profile.

### [Summary]

### [Technical Problem]

Existing EPG that can be used in a so-called mobile device (hereinafter may be simply referred to as "Existing EPG") is realized only as EPG including the channel of each area based on the countries, prefectures and ZIP codes, and so on. Therefore, in a case where an information processing apparatus that generates the existing EPG (hereinafter may be referred to as "existing information processing apparatus") is used, for example, the decrease in the user's convenience may be caused due to the generation of EPG of a wrong area by a user's incorrect input. Moreover, for example, no special consideration is taken for the generation of EPG in JP 2009-159188A, and, for example, even if the technique related to the server as described in JP 2009-159188A is used, the decrease in the user's convenience as above may be caused.

Here, as a method of preventing the decrease in the user's convenience as above, for example, it is considered that an information processing apparatus that generates EPG acquires EPG data from an apparatus that receives a broadcast signal of a television set and tuner, and so on (hereafter referred to as "receiving apparatus"). By acquiring the EPG data from the receiving apparatus, it is possible to prevent an occurrence of a situation where the decrease in the user's convenience is caused due to the generation of EPG of a wrong area, for example.

However, for example, it may be restricted to acquire the EPG data from the receiving apparatus because of the specification and so on, and it is not limited that the above-mentioned information processing apparatus can acquire the EPG data from the receiving apparatus at any time. Moreover, even if the EPG data can be acquired from the receiving apparatus, by generating EPG by the use of data acquired from an external apparatus such as a server, there is a possibility that more profitable EPG for the user can be generated such as EPG with a larger amount of information and EPG with fresher information (for example, EPG including information on the latest program).

Therefore, it is not limited that it is possible to use the above-mentioned method of preventing the decrease in the user's convenience, and, even if the above-mentioned method can be used, it is not limited that it is possible to generate more profitable EPG for the user.

The present disclosure suggests a new improved information processing apparatus, receiving apparatus and information processing method that can improve the user's convenience and generate more profitable EPG.

### [Solution to Problem]

According to one exemplary embodiment, the disclosure is directed to an information processing apparatus as defined in claim 1.

According to another exemplary embodiment, the disclosure is directed to a method performed by an information processing apparatus as defined in claim 13. The method including acquiring channel information corresponding to broadcast content from a second information processing apparatus; acquiring program guide information from a third information processing apparatus based on the acquired channel information; and generating a program guide based on the channel information and the program guide information.

According to another exemplary embodiment, the disclosure is directed to a computer-readable medium including computer-program instructions as defined in claim 14.

### [Advantageous Effects of Invention]

According to the present disclosure, it is possible to improve the user's convenience and generate more profitable EPG.

### [Brief Description of Drawings]

[FIG. 1]

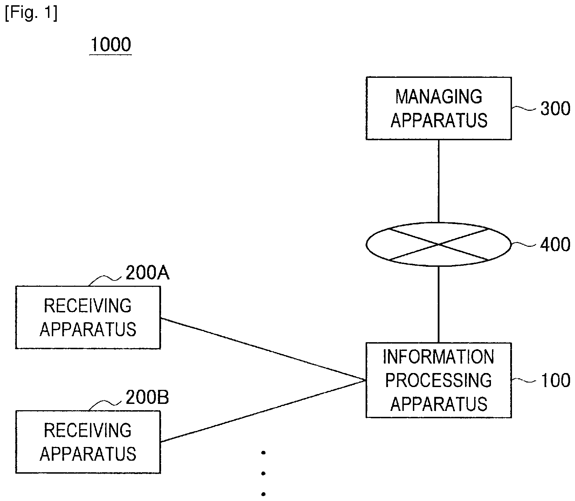

   FIG. 1 is an explanatory diagram illustrating one example of an information processing system according to an embodiment of the present technology.
[FIG. 2]

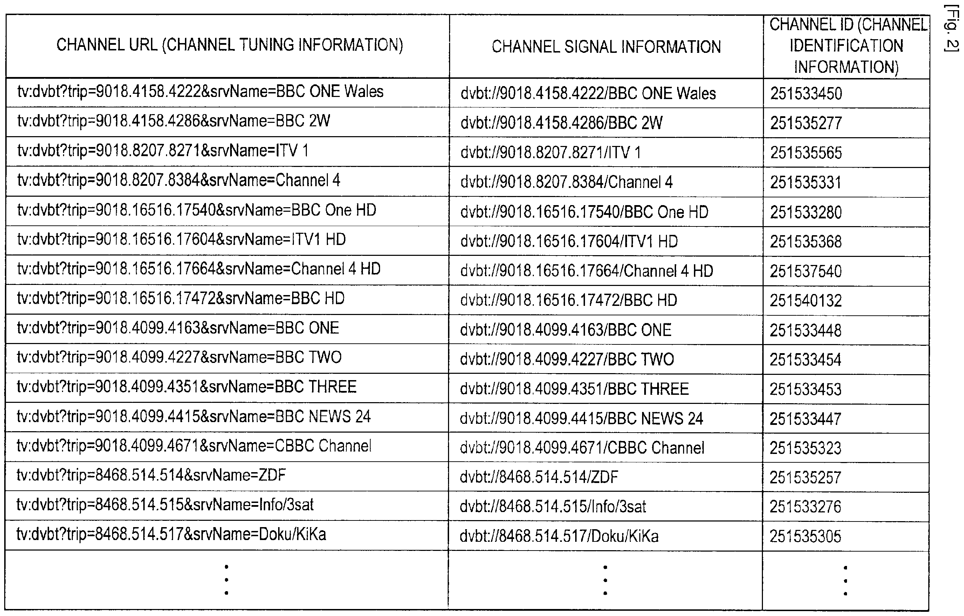

   FIG. 2 is an explanatory diagram to describe one example of association between channel tuning information and each channel in generated EPG in an information processing apparatus according to an embodiment of the present technology.
[FIG. 3]

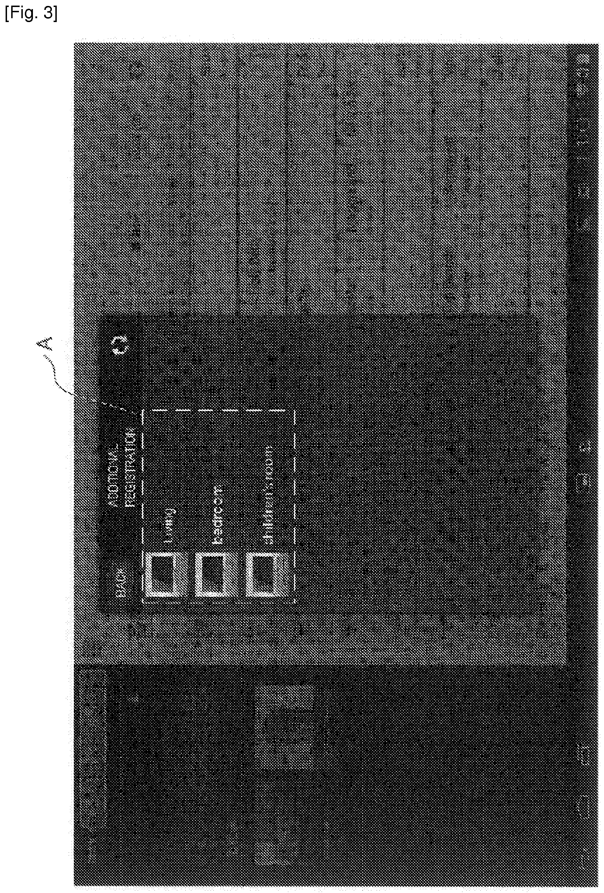

   FIG. 3 is an explanatory diagram to describe one example of switching processing according to an embodiment of the present technology.
[FIG. 4]

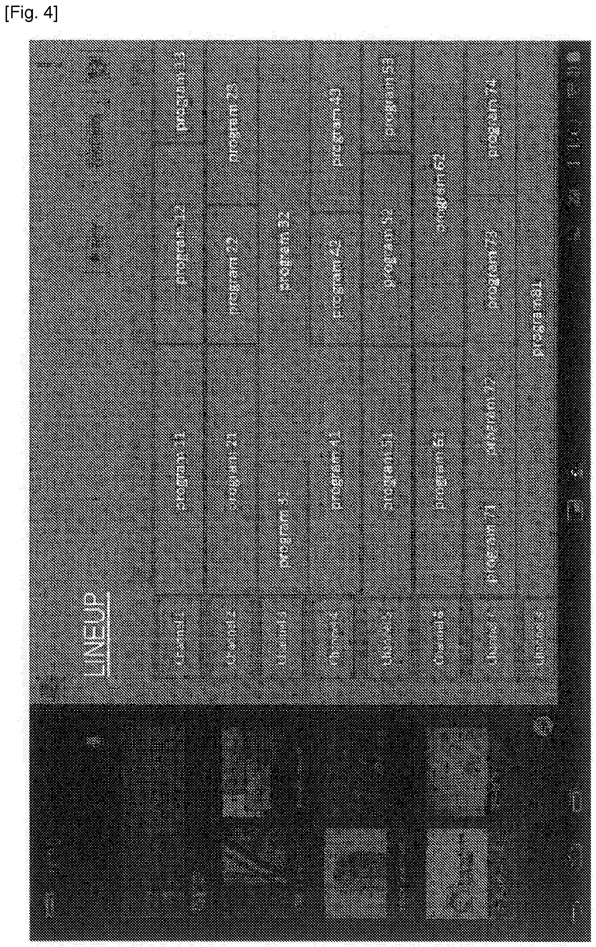

   FIG. 4 is an explanatory diagram to describe one example of switching processing according to an embodiment of the present technology.
[FIG. 5]

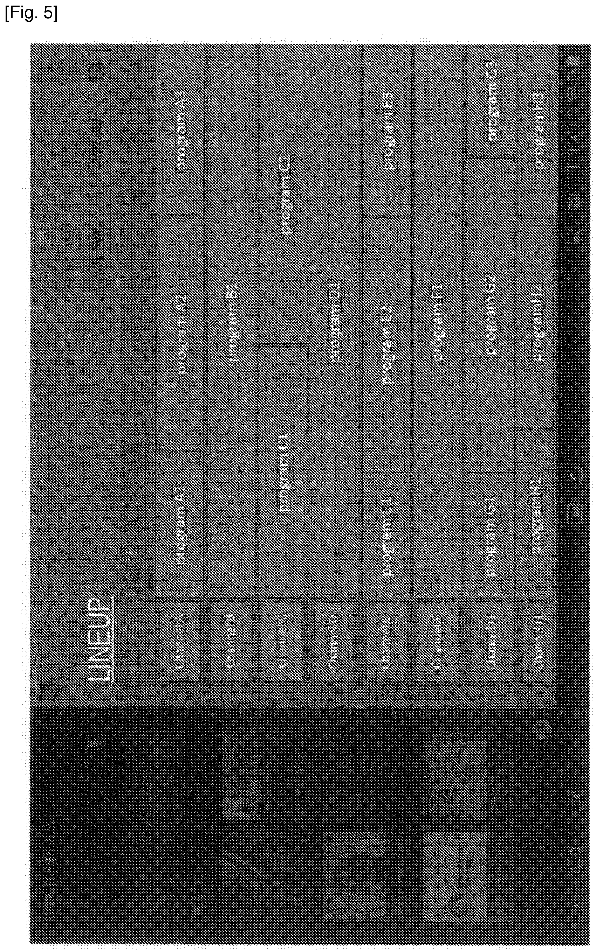

   FIG. 5 is an explanatory diagram to describe one example of switching processing according to an embodiment of the present technology.
[FIG. 6]

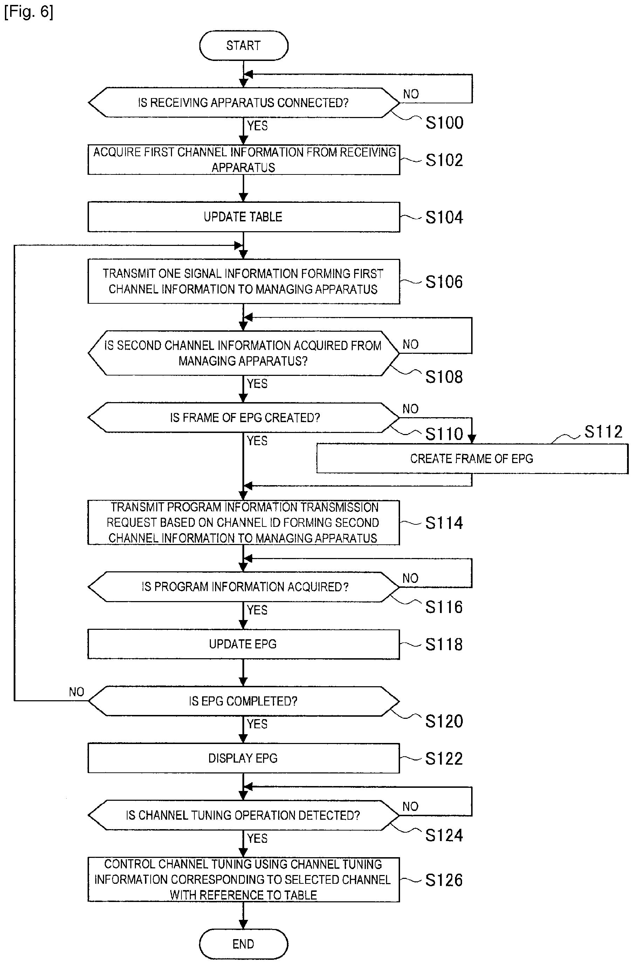

   FIG. 6 is a flowchart illustrating one example of processing according to an information processing method of the present embodiment in an information processing apparatus according to an embodiment of the present technology.
[FIG. 7]

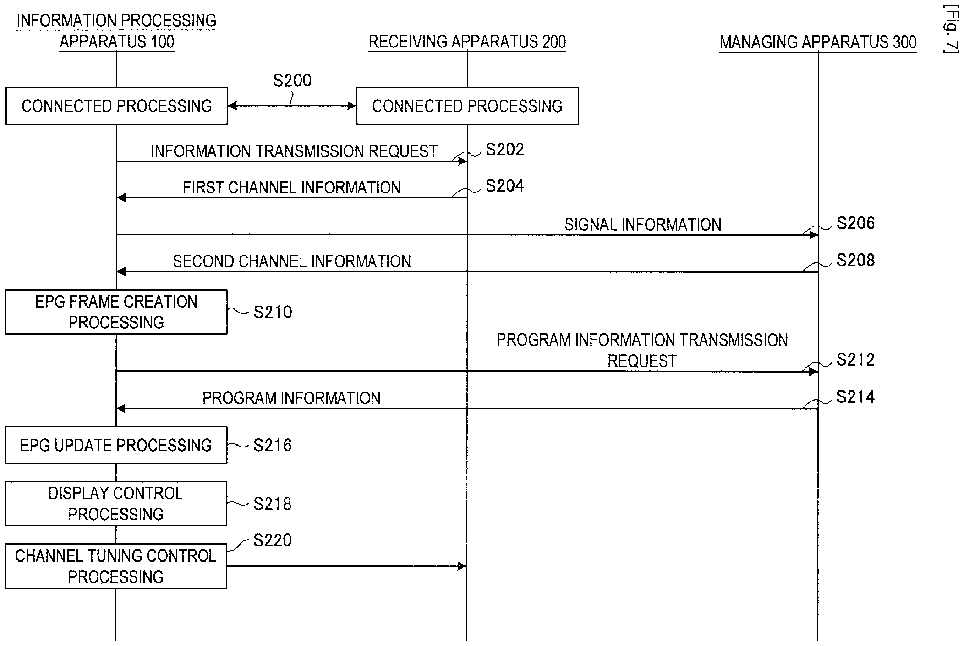

   FIG. 7 is an explanatory diagram illustrating one example of processing in an information processing system according to an embodiment of the present technology.
[FIG. 8]

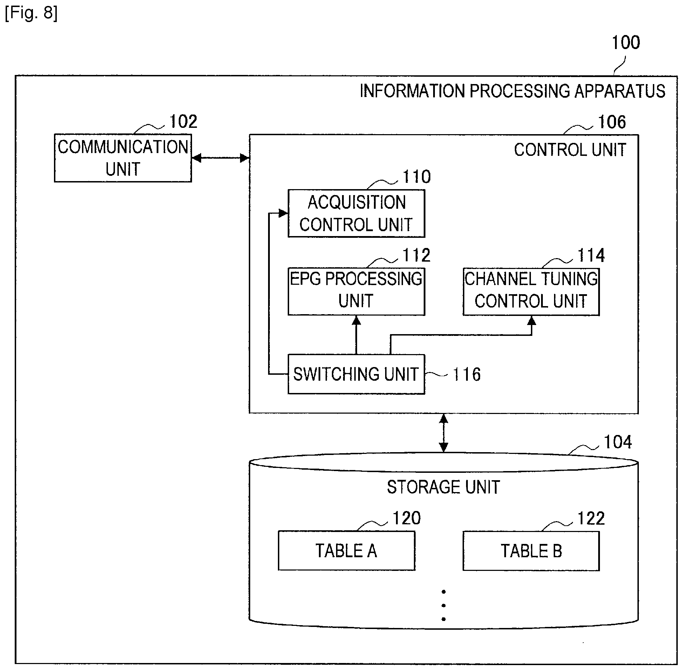

   FIG. 8 is a block diagram illustrating one example of a configuration of an information processing apparatus according to an embodiment of the present technology.
[FIG. 9]

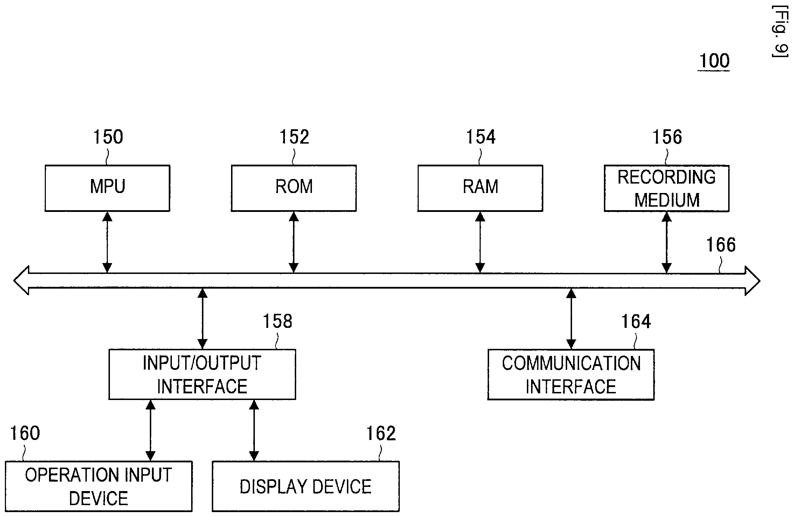

   FIG. 9 is an explanatory diagram illustrating one example of a hardware configuration of an information processing apparatus according to an embodiment of the present technology.
[FIG. 10]

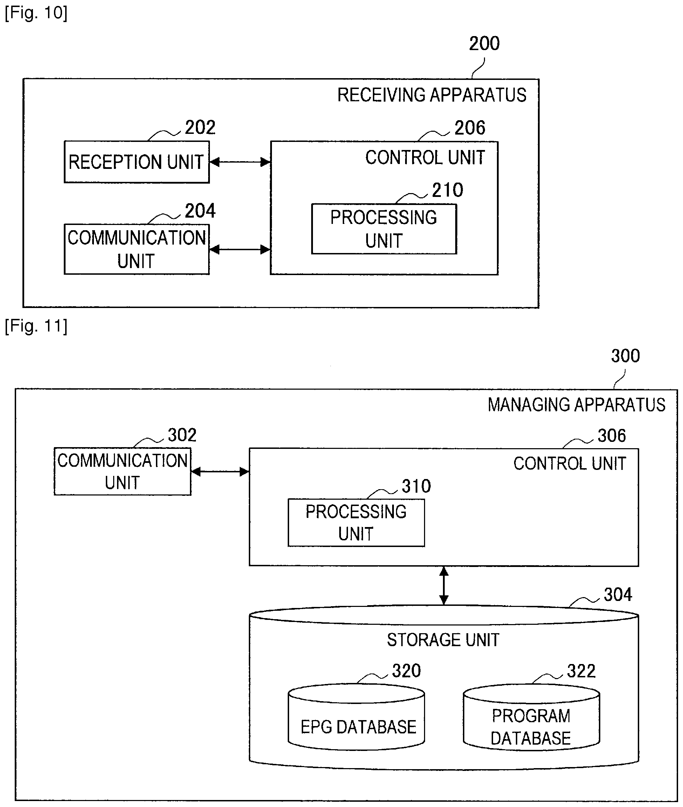

   FIG. 10 is a block diagram illustrating one example of a configuration of a receiving apparatus according to an embodiment of the present technology.
[FIG. 11]
   FIG. 11 is a block diagram illustrating one example of a configuration of a management apparatus according to an embodiment of the present technology.

### [Description of Embodiments]

A preferred embodiment of the present disclosure is described below in detail with reference to the accompanying drawing. Also, in the specification and the drawings, the same reference numerals are assigned to components that substantially have the same functional configurations and overlapping explanation is omitted.

Also, an explanation is given below in the following order.
1 .Information processing method according to the present embodiment
2. Information processing system according to the present embodiment
3. Program according to the present embodiment

### (Information processing method according to the present embodiment)

Before the configuration of each apparatus forming an information processing system according to the present embodiment is described, first, an information processing method according to the present embodiment is described. In the following, the information processing method according to the present embodiment is described using an example case where an information processing apparatus according to the present embodiment forming the information processing system according to the present embodiment performs processing according to the information processing method according to the present embodiment.

### (1) Outline of information processing method according to the present embodiment

As described above, for example, existing EPG is realized only as EPG including the channel of each area based on the countries, preferences and ZIP codes, and so on. Therefore, in a case where an existing information processing apparatus is used, for example, the following problems (a) to (c) may be caused.

### (a) First example of problem that may be caused

In a case where an existing information processing apparatus is used, the user has to input, for example, the country, the prefecture or the ZIP code. Also, in a case where the user performs a wrong input, it follows that, for example, a channel indicated by a broadcast signal which is actually received by a receiving apparatus such as a television set does not match a channel in existing EPG generated by an existing information processing apparatus. Therefore, in a case where the existing information processing apparatus is used, the user's convenience may be decreased.

### (b) Second example of problem that may be caused

For example, in addition to the user's incorrect input as shown in the above-mentioned first example, there is a case where a channel indicated by a broadcast signal which is actually received by a receiving apparatus such as a television set does not match a channel in existing EPG generated by an existing information processing apparatus and a difference is made. For example, although there is a case where a receiving apparatus can receive channels corresponding to multiple prefectures in the prefectural boundary or the like, an existing information processing apparatus can generate only EPG including the channel of a specific prefecture. Moreover, even if the channels of multiple prefectures can be set in the existing information processing apparatus, the user has to add the channels of other areas one by one. Therefore, in a case where the existing information processing apparatus is used, the user's convenience may be decreased.

### (c) Third example of problem that may be caused

For example, in a case where the user having an existing information processing apparatus moves to other areas such as other countries and other prefectures or the user moves to other receiving apparatuses with different channels indicated by received broadcast signals, the user has to input the country, the prefecture or the ZIP code to set an area again. Therefore, in a case where an existing information processing apparatus is used, the user's convenience may be decreased.

For example, as shown in above-mentioned (a) to (c), in a case where an existing information processing apparatus that generates existing EPG is used, the decrease in the user's convenience may be caused.

Moreover, as described above, it is not limited that the method of preventing the decrease in the user's convenience can be used, and, even if the above-mentioned method can be used, it is not limited that it is possible to generate more profitable EPG for the user.

Therefore, an information processing apparatus according to the present embodiment acquires information on EPG (which is described later) from a management apparatus on the basis of information (data) acquired from a receiving apparatus (acquisition control processing). Also, the information processing apparatus according to the present embodiment generates EPG on the basis of the acquired information on EPG (EPG processing).

Here, by generating EPG based on information on EPG acquired from a management apparatus on the basis of information (data) acquired from the receiving apparatus, the information processing apparatus according to the present embodiment can generate EPG corresponding to a broadcast signal received by the receiving apparatus (or a broadcast signal that can be received). Therefore, for example, since the information processing apparatus according to the present embodiment can generate EPG corresponding to the broadcast signal received by the receiving apparatus even if the country, the prefecture or the ZIP code is input by the user, for example, occurrence of the above-mentioned problems (a) to (c) that may be caused in an existing EPG is prevented.

Moreover, the information processing apparatus according to the present embodiment generates EPG on the basis of information on EPG acquired from the management apparatus. Therefore, as compared with a case where EPG is generated on the basis of data acquired from the receiving apparatus like a case where the above-mentioned method of preventing the decrease in the user's convenience is used, there is a higher possibility that the information processing apparatus according to the present embodiment can generate more profitable EPG for the user such as EPG with a larger amount of information and fresher information.

Therefore, the information processing apparatus according to the present embodiment can improve the user's convenience and generate more profitable EPG by performing (1) gain control and (2) EPG processing as processing according to the information processing method of the present embodiment.

Moreover, by performing (1) gain control and (2) EPG processing as the processing according to the information processing method of the present embodiment, for example, following (A) to (C) can be realized.
(A) EPG including a channel received by a television set (one example of the receiving apparatus) can be displayed on a display screen of a mobile device (one example of the information processing apparatus according to the present embodiment).
(B) Even if the user does not input the country, the prefecture and the ZIP code, EPG including a channel received by a television set (one example of the receiving apparatus) can be displayed on a display screen of a mobile device (one example of the information processing apparatus according to the present embodiment).
(C) For example, by connecting a mobile device (one example of the information processing apparatus according to the present embodiment) to other television sets with a different received channel (one example of the receiving apparatus) or a television set (one example of the receiving apparatus) of other countries or other prefectures, EPG including the channel received by the connected television set (one example of the receiving apparatus) can be displayed on a display screen of a mobile device (one example of the information processing apparatus according to the present embodiment) without any settings by the user.

In the following, one example of the processing according to the information processing method of the present embodiment is described while describing one example of the information processing system according to the present embodiment.

### (2) One example of processing according to information processing method of the present embodiment

FIG. 1 is an explanatory diagram illustrating one example of an information processing system 1000 according to the present embodiment. For example, the information processing system 1000 includes an information processing apparatus 100, receiving apparatuses 200A, 200B, --- (which may be generically referred to as "receiving apparatus 200") and a managing apparatus 300. For example, the information processing apparatus 100 and the receiving apparatus 200 perform wired or wireless communication. Moreover, for example, the information processing apparatus 100 and the managing apparatus 300 perform communication through a network 400 (or, directly). Here, although FIG. 1 illustrates an example where the information processing system according to the present embodiment has the plurality of receiving apparatuses 200, the information processing system according to the present embodiment is not limited to the above. For example, the information processing system according to the present embodiment may adopt a configuration including one the receiving apparatus 200.

Here, for example, the network 400 according to the present embodiment includes: wired networks such as a LAN (Local Area Network) and a WAN (Wide Area Network); wireless networks such as a wireless LAN (WLAN: Wireless Local Area Network) and a wirelesses WAN (WWAN: Wireless Wide Area Network) through a base station; and the Internet using communication protocols such as a TCP/IP (Transmission Control Protocol/Internet Protocol).

The receiving apparatus 200 receives a broadcast signal. Moreover, the receiving apparatus 200 generates channel tuning information to control channel tuning, which corresponds to channel signal information based on the received broadcast signal.

Here, as signal information according to the present embodiment, for example, there is the following data. One example of signal information according to the present embodiment is described later.
- "nid", "tsid", "sid" and channel name in ARIB (Association of Radio Industries and Broadcast)
- "onid", "tsid", "sid" and "Call sign" in DVB (Digital Video Broadcasting)
- "majorch", "minorch", "shortname", "physical number", "program number" and "tsid" of VCT (Virtual Channel Table) in ATSC (Advanced Television Systems Committee)

Moreover, as channel tuning information generated by the receiving apparatus 200, for example, there is a URL (Uniform Resource Locator) including the IP (Internet Protocol) address of the apparatus, information on channels and signal information. To be more specific, for example, the receiving apparatus 200 generates a URL in which parameters including the broadcast wave type, signal information and channel name of a channel are assigned to the IP address of the apparatus, as channel tuning information corresponding to the apparatus. In the following, a URL generated by the receiving apparatus 200 as channel tuning information may be referred to as "channel URL".

Here, the channel tuning information according to the present embodiment is not limited to the above-mentioned channel URL. For example, the receiving apparatus 200 may generate data in an arbitrary format that can specify a channel and perform channel tuning, as channel tuning information. One example of the channel tuning information according to the present embodiment is described later.

The receiving apparatus 200 transmits the channel signal information and the generated channel tuning information to the information processing apparatus 100. Moreover, for example, the receiving apparatus 200 performs channel tuning by selecting a channel corresponding to channel tuning information on the basis of the channel tuning information sent from the information processing apparatus 100.

The managing apparatus 300 transmits information on EPG corresponding to the signal information transmitted from the information processing apparatus 100, to the information processing apparatus 100. Here, for example, the managing apparatus 300 transmits information on EPG stored in a storage unit (which is described later) held by the apparatus or an external recording medium, to the information processing apparatus 100.

Here, as the information on EPG according to the present embodiment, for example, there are data to create the frame of EPG and program information (data related to a program). Moreover, as the data to create the frame of EPG according to the present embodiment, for example, there are data indicating the channel name, data indicating the channel number, data indicating the channel logo and identification information (for example, channel ID) to identify the channel in EPG, and so on. Moreover, as the program information according to the present embodiment, there are data indicating the program title, data indicating details of the program and data indicating the beginning time and end time of the program, and so on.

The information processing apparatus 100 performs processing according to the information processing method of the present embodiment and generates EPG. In the following, processing in the information processing apparatus 100 is described more specifically.

### (1) Acquisition control processing

The information processing apparatus 100 acquires channel signal information and channel tuning information corresponding to the signal information from the receiving apparatus 200. The information processing apparatus 100 acquires the channel signal information and the channel tuning information corresponding to the signal information by transmitting an information transmission request to request the transmission of information, to the connected receiving apparatus 200.

Here, "connection between the information processing apparatus 100 and the receiving apparatus 200" according to the present embodiment denotes, for example, a state where the information processing apparatus 100 and the receiving apparatus 200 can perform communication. In the following, information acquired by the above-mentioned information transmission request from the receiving apparatus 200 in the information processing apparatus 100 may be generically referred to as "first channel information".

Moreover, the information processing apparatus 100 acquires the information on EPG corresponding to the signal information from the managing apparatus 300 on the basis of, for example, the acquired channel signal information. The information processing apparatus 100 acquires the information on EPG corresponding to the signal information from the managing apparatus 300 by transmitting the signal information acquired from the receiving apparatus 200 to the managing apparatus 300, for example. In the following, information including the information on EPG which the information processing apparatus 100 acquires from the managing apparatus 300 may be generically referred to as "second channel information". Here, as described above, as the information on EPG according to the present embodiment, for example, there are data to create the frame of EPG according to the present embodiment and program information according to the present embodiment. That is, the second channel information according to the present embodiment including the information on EPG according to the present embodiment may include, for example, the data to create the frame of EPG according to the present embodiment and the program information according to the present embodiment.

The information processing apparatus 100 acquires information on EPG corresponding to the signal information acquired from the receiving apparatus 200, from the managing apparatus 300, by performing the above-mentioned processing, for example.

### (2) EPG processing

For example, the information processing apparatus 100 generates EPG on the basis of acquired information on EPG.

To be more specific, for example, the information processing apparatus 100 creates the frame of EPG on the basis of data to create the frame of EPG acquired from the managing apparatus 300. Subsequently, the information processing apparatus 100 generates EPG by applying the title or content of a program to a corresponding part in the created frame of EPG, on the basis of program information acquired from the managing apparatus 300, for example.

Moreover, in the case of generating EPG, the information processing apparatus 100 associates the acquired channel tuning information and each channel in the generated EPG.

To be more specific, for example, the information processing apparatus 100 associates the channel tuning information and each channel in the generated EPG by associating channel signal information, channel tuning information and identification information to identify the channel in generated EPG included in the information on EPG. Here, for example, the information processing apparatus 100 acquires the channel tuning information used for association and the channel tuning information corresponding to the signal information from the first channel information acquired from the receiving apparatus 200. Moreover, for example, the information processing apparatus 100 acquires the identification information used for association from the second channel information acquired from the managing apparatus 300.

FIG. 2 is an explanatory diagram to describe one example of associating channel tuning information and each channel in generated EPG in the information processing apparatus 100 according to the present embodiment. Here, FIG. 2 illustrates one example of a table in which channel URL's (one example of channel tuning information), channel signal information and channel ID's (one example of channel identification information) are associated.

For example, the information processing apparatus 100 associates and records a channel URL (one example of channel tuning information) forming the first channel information and signal information corresponding to the channel URL in a table every time the first channel information is acquired from the receiving apparatus 200.

To be more specific, for example, in the table illustrated in FIG. 2, in a case where there is no channel URL and signal information equivalent to a channel URL (one example of channel tuning information) and signal information that form the first channel information, the information processing apparatus 100 newly associates and records the channel URL and signal information that form the first channel information in the table. Moreover, for example, in the table illustrated in FIG. 2, in a case where there are already a channel URL and signal information equivalent to the channel URL (one example of channel tuning information) and signal information that form the first channel information, the information processing apparatus 100 updates the signal information and channel tuning information that already exist in the table.

Also, for example, every time the second channel information is acquired from the managing apparatus 300, the information processing apparatus 100 associates and records identification information (one example of information on EPG) to identify a channel in EPG, which forms the second channel information, and the signal information and the channel URL (one example of channel tuning information) in the table. To be more specific, for example, in the table illustrated in FIG. 2, the information processing apparatus 100 searches signal information corresponding to the identification information (one example of information on EPG) that forms the second channel information and associates and records the searched signal information and the identification information.

Here, the association between channel tuning information and each channel in generated EPG according to the present embodiment is not limited to be performed with the table illustrated in FIG. 2. For example, by an arbitrary method by which association is possible like RDB (Relational DataBase), the information processing apparatus 100 can associate channel tuning information and each channel in generated EPG.

Moreover, it is needless to say that the channel tuning information according to the present embodiment, the signal information according to the present embodiment and the identification information according to the present embodiment are not limited to the example illustrated in FIG. 2.

For example, as illustrated in FIG. 2, by associating acquired channel tuning information and each channel in generated EPG, channel tuning information associated with a channel selected in EPG is uniquely specified. Therefore, for example, as illustrated in FIG. 2, by associating the acquired channel tuning information and each channel in the generated EPG, it is possible to realize control of channel tuning by the use of channel tuning information according to the present embodiment.

For example, the information processing apparatus 100 according to the present embodiment performs above-mentioned processing (1) (i.e., acquisition control processing) and above-mentioned processing (2) (i.e., EPG processing) as processing according to the information processing method of the present embodiment.

Here, the information processing apparatus 100 acquires information on EPG corresponding to channel signal information acquired from the receiving apparatus 200, from the managing apparatus 300, in above-mentioned processing (1) (i.e., acquisition control processing). Subsequently, the information processing apparatus 100 generates EPG on the basis of the information on EPG acquired in above-mentioned processing (1) (i.e., acquisition control processing) in above-mentioned processing (2) (i.e., EPG processing).

Therefore, since the information processing apparatus 100 can generate EPG corresponding to a broadcast signal received by the receiving apparatus 200, for example, occurrence of above-mentioned problems (a) to (c) that may be caused in existing EPG is prevented. Moreover, since the information processing apparatus 100 generates EPG on the basis of the information on EPG acquired from the managing apparatus 300, there is a higher possibility that it is possible to generate more profitable EPG for the user such as EPG with a larger amount of information and fresher information, as compared with a case where EPG is generated on the basis of the data acquired from the receiving apparatus 200 like a case where the above-mentioned method of preventing the decrease in the user's convenience is used.

Therefore, the information processing apparatus 100 according to the present embodiment can improve the user's convenience and generate more profitable EPG by performing above-mentioned processing (1) (i.e., acquisition control processing) and above-mentioned processing (2) (i.e., EPG processing) as processing according to the information processing method of the present embodiment.

Here, the processing according to the information processing method of the present embodiment is not limited to above-mentioned processing (1) (i.e., acquisition control processing) and above-mentioned processing (2) (i.e., EPG processing).

For example, the information processing apparatus 100 may control channel tuning in the receiving apparatus 200 on the basis of channel tuning information corresponding to a channel selected by an operation with respect to generated EPG (i.e., channel tuning control processing). Here, as the operation with respect to EPG according to the present embodiment, for example, there is a channel tuning operation to select a channel.

To be more specific, the information processing apparatus 100 specifies channel tuning information corresponding to identification information of the channel indicated by the channel tuning operation (i.e., identification information of the selected channel) by referring to the table illustrated in FIG. 2, for example. Here, as described above, when the information processing apparatus 100 associates the acquired channel tuning information and the identification information of each channel in the generated EPG as illustrated in FIG. 2, for example, it is possible to uniquely specify channel tuning information associated with a selected channel in EPG.

Also, for example, the information processing apparatus 100 performs communication with the receiving apparatus 200 on the basis of the specified channel tuning information, causes the receiving apparatus 200 to select a channel corresponding to the channel tuning information and thereby causes the receiving apparatus 200 to perform channel tuning.

Also, the processing according to the information processing method of the present embodiment is not limited to "above-mentioned processing (1) (i.e., acquisition control processing) and above-mentioned processing (2) (i.e., EPG processing)" and "above-mentioned processing (1) (i.e., acquisition control processing), above-mentioned processing (2) (i.e., EPG processing) and the above-mentioned channel tuning control processing".

For example, the information processing apparatus 100 may further switch the receiving apparatus 200 in addition to each above-mentioned processing (i.e., switching processing). For example, the information processing apparatus 100 performs switching to a selected receiving apparatus 200 on the basis of a user operation.

To be more specific, in a case where the switching processing according to the present embodiment is performed, the information processing apparatus 100 acquires signal information and channel tuning information from the switched receiving apparatus 200 in above-mentioned processing (1) (i.e., acquisition control processing) and generates EPG corresponding to the switched receiving apparatus 200 in above-mentioned processing (2) (i.e., EPG processing).

Moreover, in a case where the switching processing according to the present embodiment is performed, the information processing apparatus 100 controls channel tuning in the switched receiving apparatus 200 in the above-mentioned channel tuning control processing.

FIG. 3 to FIG. 5 are explanatory diagrams to describe one example of the switching processing according to the present embodiment and, for example, illustrate one example of a screen displayed on a display screen of the information processing apparatus 100.

Here, FIG. 3 illustrates one example of a switching screen to request the user to switch the receiving apparatus 200. To be more specific, as illustrated in "A" in FIG. 3, FIG. 3 illustrates one example of the switching screen to switch between a television set placed in "living" (one example of the receiving apparatus 200), a television set placed in "bedroom" (one example of the receiving apparatus 200) and a television set placed in "children's room" (one example of the receiving apparatus 200).

Moreover, FIG. 4 illustrates one example of EPG generated by the information processing apparatus 100 in a case where the television set placed in "living" illustrated in FIG. 3 (one example of the receiving apparatus 200) is selected. Moreover, FIG. 5 illustrates one example of EPG generated by the information processing apparatus 100 in a case where the television set placed in "bedroom" illustrated in FIG. 4 (one example of the receiving apparatus 200) is selected.

For example, as illustrated in FIG. 4 and FIG. 5, it is understood that, by switching the receiving apparatus 200 by the switching processing according to the present embodiment, EPG generated by the information processing apparatus 100 changes according to the switched receiving apparatus 200.

In a case where a channel tuning operation is performed for EPG illustrated in FIG. 4, based on channel tuning information corresponding to the television set placed in "living" (one example of the receiving apparatus 200), channel tuning in the television set placed in "living" is controlled. Moreover, in a case where a channel tuning operation is performed for EPG illustrated in FIG. 5, based on channel tuning information corresponding to the television set placed in "bedroom" (one example of the receiving apparatus 200), channel tuning in the television set placed in "bedroom" is controlled.

### [3] Specific example of processing according to information processing method of the present embodiment

Next, processing according to the information processing method of the present embodiment mentioned above is described more specifically.

FIG. 6 is a flowchart illustrating one example of the processing according to the information processing method of the present embodiment in the information processing apparatus 100 according to the present embodiment. Here, for example, the processing in steps S102, S106 and S114 illustrated in FIG. 6 corresponds to above-mentioned processing (1) (i.e., acquisition control processing) and the processing in steps S104, S110, S112, S118 and S120 illustrated in FIG. 6 corresponds to above-mentioned processing (2) (i.e., EPG processing). Moreover, the processing in step S126 illustrated in FIG. 6 corresponds to the above-mentioned channel tuning control processing.

The information processing apparatus 100 determines whether the receiving apparatus 200 is connected (S100). In a case where it is not determined in step S100 that the receiving apparatus 200 is connected, for example, the information processing apparatus 100 does not advance processing until it is determined that the receiving apparatus 200 is connected.

Moreover, in a case where it is determined in step S100 that the receiving apparatus 200 is connected, the information processing apparatus 100 acquires first channel information from the connected receiving apparatus 200 (S102). For example, the information processing apparatus 100 acquires the first channel information from the receiving apparatus 200 by transmitting an information transmission request to the receiving apparatus 200.

When the first channel information is acquired in step S102, the information processing apparatus 100 updates a table in which a channel URL (one example of channel tuning information), channel signal information and channel ID (one example of channel identification information) are associated as illustrated in FIG. 2, for example (S104). To be more specific, for example, in a case where there are no channel URL and signal information equivalent to a channel URL (one example of channel tuning information) and signal information that form the acquired first channel information in the table, the information processing apparatus 100 newly associates and records the channel URL and signal information that form the first channel information in the table. Also, for example, in a case where there are already a channel URL and signal information equivalent to a channel URL (one example of channel tuning information) and signal information that form the acquired first channel information in the table, the information processing apparatus 100 overwrites and updates the signal information and channel tuning information that already exist in the table.

The information processing apparatus 100 transmits signal information on one channel forming the first channel information to the managing apparatus 300 (S106).

Here, although FIG. 6 illustrates an example where the processing in step S106 is performed after the processing in step S104 is performed, for example, the information processing apparatus 100 according to the present embodiment can perform the processing in step S104 and the processing in step S106 independently. Therefore, for example, the information processing apparatus 100 according to the present embodiment may perform the processing in step S104 after the processing in step S106 or may perform the processing in step S104 and the processing in step S106 in parallel.

When the processing in step S106 is performed, the information processing apparatus 100 determines whether the second channel information is acquired from the managing apparatus 300 (S108). In a case where it is not determined in step S108 that the second channel information is acquired, for example, the information processing apparatus 100 does not advance processing until it is determined that the second channel information is acquired.

Moreover, in a case where it is determined in step S108 that the second channel information is acquired, the information processing apparatus 100 determines whether the frame of EPG is generated (S110). In a case where it is determined in step S110 that the frame of EPG is generated, the information processing apparatus 100 performs the processing in step S114 described later.

Moreover, when it is not determined in step S110 that the frame of EPG is generated, for example, the information processing apparatus 100 creates the frame of EPG on the basis of data to create the frame of EPG (one example of information forming information on EPG), where the data forms the second channel information (S112).

When it is determined in step S110 that the frame of EPG is generated or the processing in step S112 is performed, a program information transmission request to transmit program information corresponding to the channel ID (one example of channel identification information) that forms the second channel information is transmitted to the managing apparatus 300 (S114). Here, as the program information transmission request according to the present embodiment, for example, there is data containing a channel ID and a transmission instruction of program information.

When the processing in step S114 is performed, the information processing apparatus 100 determines whether the program information is received (S116). In a case where it is not determined in step S116 that the program information is received, for example, the information processing apparatus 100 does not advance processing until it is determined that the program information is received.

Moreover, when it is determined in step S116 that the program information is received, the information processing apparatus 100 updates EPG (S118). For example, the information processing apparatus 100 updates EPG by applying the title and content of the program to a corresponding part in the created frame of EPG on the basis of the program information acquired from the managing apparatus 300.

When the processing in step S118 is performed, the information processing apparatus 100 determines whether EPG is completed (S120). For example, when the title and content of the program are applied to all channels in the frame of EPG, the information processing apparatus 100 determines that EPG is completed.

When it is not determined in step S120 that EPG is completed, the information processing apparatus 100 repeats processing from step S106.

Moreover, when it is determined in step S120 that EPG is completed, the information processing apparatus 100 displays completed EPG on a display screen (S122). Here, as the display screen to display EPG in step S122, for example, there is a display screen of a display unit (described later) held by the information processing apparatus 100. Here, the information processing apparatus 100 may display EPG on an external display device.

The information processing apparatus 100 determines whether a channel tuning operation (one example of an operation with respect to EPG) is detected (S124). In a case where it is not determined in step S124 that the channel tuning operation (one example of an operation with respect to EPG) is detected, for example, the information processing apparatus 100 does not advance processing until it is determined that the channel tuning operation is detected.

Moreover, in a case where it is determined in step S124 that the channel tuning operation (one example of an operation with respect to EPG) is detected, the information processing apparatus 100 specifies channel tuning information corresponding to the channel selected by the channel tuning operation with reference to the table and controls channel tuning in the receiving apparatus 200 by the use of the specified channel tuning information (S126). For example, the information processing apparatus 100 performs communication with the receiving apparatus 200 on the basis of the specified channel tuning information and causes the receiving apparatus 200 to select a channel corresponding to the channel tuning information.

For example, the information processing apparatus 100 performs the processing illustrated in FIG. 6 as the processing according to the information processing method of the present embodiment. By the processing illustrated in FIG. 6, above-mentioned processing (1) (i.e., acquisition control processing) and above-mentioned processing (2) (i.e., EPG processing) are realized. Therefore, for example, by performing the processing illustrated in FIG. 6, the information processing apparatus 100 can improve the user's convenience and generate more profitable EPG.

Here, the processing according to the information processing method of the present embodiment is not limited to the processing illustrated in FIG. 6. For example, by further performing the switching processing according to the present embodiment, the information processing apparatus 100 may generate EPG corresponding to each of a plurality of receiving apparatuses 200 and control channel tuning for each of the plurality of receiving apparatuses 200.

Next, one example of processing in the information processing system according to the present embodiment is shown. In the following, one example of the processing in the information processing system is shown using an information processing system 1000 illustrated in FIG. 1 as an example.

FIG. 7 is an explanatory diagram illustrating one example of processing in the information processing system 1000 according to the present embodiment. Here, the processing in steps S202 and S206 which are illustrated in FIG. 7 and performed by the information processing apparatus 100 corresponds to above-mentioned processing (1) (i.e., acquisition control processing). Moreover, the processing in steps S210 and S216 which are illustrated in FIG. 7 and performed by the information processing apparatus 100 corresponds to above-mentioned processing (2) (i.e., EPG processing). Moreover, the processing in step S220 which is illustrated in FIG. 7 and performed by the information processing apparatus 100 corresponds to the above-mentioned channel tuning control processing.

Connected processing is performed between the information processing apparatus 100 and the receiving apparatus 200 (S200). Here, for example, the processing in step S200 is performed by transmitting a connection request from the information processing apparatus 100 to the receiving apparatus 200 on the basis of a connection operation of the user.

When the information processing apparatus 100 and the receiving apparatus 200 are connected in step S200, the information processing apparatus 100 transmits an information transmission request to the receiving apparatus 200 (S202).

The receiving apparatus 200 having received the information transmission request transmitted from the information processing apparatus 100 in step S202 transmits the first channel information (S204).

For example, depending on the reception of the information transmission request, the receiving apparatus 200 generates information (channel signal information and channel tuning information corresponding to the signal information, and so on) that form the first channel information. Here, the processing in the receiving apparatus 200 is not limited to the above. For example, the receiving apparatus 200 may generate the first channel information without depending on the reception of the information transmission request. In a case where the first channel information is generated without depending on the reception of the information transmission request, for example, in response to the reception of the information transmission request, the receiving apparatus 200 transmits the first channel information including information generated in advance.

The information processing apparatus 100 having received the first channel information transmitted from the receiving apparatus 200 in step S204 transmits channel signal information that forms the first channel information to the managing apparatus 300 (S206).

The managing apparatus 300 having received the signal information transmitted from the information processing apparatus 100 in step S206 transmits second channel information (S208). Here, for example, with reference to a database in which signal information and information (for example, information on EPG) that forms the second channel information are associated, the managing apparatus 300 specifies information that forms the second channel information corresponding to signal information that matches the received signal information. Subsequently, for example, the managing apparatus 300 transmits the second channel information including the specified information.

The information processing apparatus 100 having received the second channel information transmitted from the managing apparatus 300 in step S208 creates the frame of EPG (S210). For example, the information processing apparatus 100 creates the frame of EPG by performing the processing in step S112 in FIG. 6. Here, in a case where the frame of EPG has already been created, for example, the information processing apparatus 100 does not perform the processing in step S210.

Similar to step S114 in FIG. 6, the information processing apparatus 100 transmits a program information transmission request to the managing apparatus 300 (S212).

The managing apparatus 300 having received the program information transmission request transmitted from the information processing apparatus 100 in step S212 transmits program information corresponding to the program information transmission request to the information processing apparatus 100 (S214). Here, for example, with reference to a database in which channel ID's (one example of channel identification information) and program information are associated, the managing apparatus 300 specifies program information corresponding to a channel ID that matches a channel ID included in the received program information transmission request. Subsequently, for example, the managing apparatus 300 transmits the specified program information.

Similar to step S118 in FIG. 6, the information processing apparatus 100 having received the program information transmitted from the managing apparatus 300 in step S214 updates EPG (S216).

Here, although it is not illustrated in FIG. 7, in a case where EPG is not completed by the processing in step S216, for example, the information processing apparatus 100 repeats processing from step S206.

In a case where EPG is completed by the processing in step S216, similar to the processing in step S122 in FIG. 6, the information processing apparatus 100 displays EPG on a display screen (S218).

For example, in a case where a channel tuning operation with respect to displayed EPG (one example of an operation with respect to EPG) is detected in step S218, similar to the processing in step S126 in FIG. 6, the information processing apparatus 100 controls channel tuning in the receiving apparatus 200 (S220).

In the information processing system 1000, for example, the processing illustrated in FIG. 7 is performed. Here, by performing processing illustrated in FIG. 7, above-mentioned processing (1) (i.e., acquisition control processing) and above-mentioned processing (2) (i.e., EPG processing) according to the information processing method of the present embodiment are realized in the information processing apparatus 100. Therefore, for example, by performing the processing in FIG. 7, the information processing system that can improve the user's convenience and generate more profitable EPG is realized.

Here, the processing in the information processing system according to the present embodiment is not limited to the example illustrated in FIG. 7. For example, in a case where there are a plurality of receiving apparatuses 200 as illustrated in FIG. 1, by further performing the switching processing according to the present embodiment in the information processing apparatus 100, it is possible to generate EPG corresponding to each of the plurality of receiving apparatuses 200 and control channel tuning for each of the plurality of receiving apparatuses 200.

### (Information processing system according to the present embodiment)

Next, one example of configuration of each of the information processing apparatus according to the present embodiment, the receiving apparatus according to the present embodiment and the management apparatus according to the present embodiment, which form the information processing system according to the present embodiment, is described. In the following, one example of the configuration of each of the information processing apparatus 100, the receiving apparatus 200 and the managing apparatus 300 is described using an example case where the information processing system according to the present embodiment is the information processing system 1000 illustrated in FIG. 1.

### (I) Information processing apparatus 100

FIG. 8 is a block diagram illustrating one example of a configuration of the information processing apparatus 100 according to the present embodiment. For example, the information processing apparatus 100 includes a communication unit 102, a storage unit 104 and a control unit 106.

Also, for example, the information processing apparatus 100 may include a ROM (Read Only Memory, which is not illustrated), a RAM (Random Access Memory, which is not illustrated), an operation unit (not illustrated) that can be operated by the user and a display unit (not illustrated) that displays various screens on a display screen. For example, the information processing apparatus 100 connects the above-mentioned components by a bus as a data transmission path.

Here, the ROM (not illustrated) stores a program used by the control unit 106 and control data such as a calculation parameter. The RAM (not illustrated) temporarily stores a program executed by the control unit 106, and so on.

Moreover, as the operation unit (not illustrated), there is an operation input device which is described later, and, as the display unit (not illustrated), there is a display device that is described later.

### (Hardware configuration example of the information processing apparatus 100)

FIG. 9 is an explanatory diagram illustrating one example of a hardware configuration of the information processing apparatus 100 according to the present embodiment. For example, the information processing apparatus 100 includes an MPU 150, a ROM 152, a RAM 154, a recording medium 156, an input/output interface 158, an operation input device 160, a display device 162 and a communication interface 164. Moreover, for example, the information processing apparatus 100 connects the components by a bus 166 as a data transmission path.

For example, the MPU150 includes an MPU (Micro Processing Unit) and various processing circuits, and functions as the control unit 106 that controls the whole of the information processing apparatus 100. Moreover, in the information processing apparatus 100, for example, the MPU 150 plays the roles of a gain control unit 110, EPG processing unit 112, channel tuning control unit 114 and switching unit 116, which are described later.

The ROM 152 stores a program used by the MPU 150 and control data such as a calculation parameter. The RAM 154 temporarily stores, for example, a program executed by the MPU 150.

The recording medium 156 functions as the storage unit 104, and, for example, stores various kinds of data such as a table (one example of data that associates channel tuning information and each channel in EPG) and an application. Here, as the recording medium 156, for example, there are magnetic recording media such as a hard disk and nonvolatile memories such as a flash memory. Moreover, the recording medium 156 may be detachable from the information processing apparatus 100.

For example, the input/output interface 158 connects the operation input device 160 and the display device 162. The operation input device 160 functions as an operation unit (not illustrated) and the display device 162 functions as a display unit (not illustrated). Here, as the input/output interface 158, for example, there are a USB (Universal Serial Bus) terminal, a DVI (Digital Visual Interface) terminal, a HDMI (High-Definition Multimedia Interface) terminal and various processing circuits. Moreover, for example, the operation input device 160 is provided on the information processing apparatus 100 and connected to the input/output interface 158 in the information processing apparatus 100. As the operation input device 160, for example, there are a button, a direction key and a rotation type selector such as a jog dial or combinations of these. Moreover, for example, the display device 162 is provided on the information processing apparatus 100 and connected to the input/output interface 158 in the information processing apparatus 100. As the display device 162, for example, there are a liquid crystal display, an organic electro-luminescence display and an OLED display (Organic Light Emitting Diode display).

Here, it is needless to say that the input/output interface 158 can connect to external devices such as an operation input device (for example, a keyboard and a mouse) and display device as external apparatuses of the information processing apparatus 100. Moreover, the display device 162 may denote a device that can perform display and user operation, such as a touch screen.

The communication interface 164 is a communication unit held by the information processing apparatus 100, and functions as the communication unit 102 to perform wired/wireless communication with external apparatuses such as the receiving apparatus 200 and the managing apparatus 300 through a network (or directly). Here, as the communication interface 164, for example, there are a communication antenna and an RF (Radio Frequency) circuit (wireless communication), the IEEE802.15.1 port and a transmission/reception circuit (wireless communication), and the IEEE802.11b port and a transmission/reception circuit (wired communication).

The information processing apparatus 100 performs the processing according to the information processing method of the present embodiment by the configuration illustrated in FIG. 9, for example. Here, the hardware configuration of the information processing apparatus 100 according to the present embodiment is not limited to the configuration illustrated in FIG. 9.

For example, the information processing apparatus 100 may include a plurality of communication interfaces with different communication schemes or the same communication scheme.

Moreover, for example, in the case of performing communication with external apparatuses such as the receiving apparatus 200 and the managing apparatus 300 through an external communication device connected through the input/output interface 158, the information processing apparatus 100 may not include the communication interface 164.

Moreover, for example, in a case where the information processing apparatus 100 performs processing by the use of the external recording medium connected through the input/output interface 158 or a table (one example of data that associates channel tuning information and each channel in EPG) stored in a recording medium held by an external apparatus such as a server, the information processing apparatus 100 may not include the recording medium 156.

Moreover, for example, the information processing apparatus 100 can adopt a configuration without the operation device 160 and the display device 162.

Referring to FIG. 8 again, one example of the configuration of the information processing apparatus 100 is described. The communication unit 102 is a communication unit held by the information processing apparatus 100 and performs wired/ wireless communication with external apparatuses such as the receiving apparatus 200 and the managing apparatus 300 through a network (or directly). Moreover, in the communication unit 102, communication is controlled by the control unit 106, for example.

Here, as the communication unit 102, for example, although there are a communication antenna, an RF circuit, a LAN terminal and a transmission/reception circuit, the configuration of the communication unit 102 is not limited to the above. For example, the communication unit 102 can adopt a configuration supporting an arbitrary standard in which it is possible to perform communication with a USB terminal and a transmission/reception circuit, or an arbitrary configuration in which it is possible to perform communication with an external apparatus through the network 400.

The storage unit 104 is a storage unit held by the information processing apparatus 100 and stores various kinds of data such as a table (one example of data that associates channel tuning information and each channel in EPG) and an application. FIG. 8 illustrates an example where table A120 corresponding to the receiving apparatus 200A illustrated in FIG. 1, table B122 corresponding to the receiving apparatus 200B illustrated in FIG. 1, ---, are stored in the storage unit 104.

Here, as the storage unit 104, for example, there are a magnetic recording medium such as a hard disk and a nonvolatile memory such as a flash memory. Moreover, the storage unit 104 may be detachable from the information processing apparatus 100.

The control unit 106 includes an MPU, for example, and plays a role of controlling the whole of the information processing apparatus 100. Moreover, for example, the control unit 106 includes the gain control unit 110, the EPG processing unit 112, the channel tuning control unit 114 and the switching unit 116, and plays a leading role of performing processing according to the information processing method of the present embodiment.

The gain control unit 110 plays a leading role of performing above-mentioned processing (1) (i.e., acquisition control processing) and acquires channel signal information and channel tuning information corresponding to the signal information from the receiving apparatus 200 or acquires information on EPG corresponding to the signal information from the management apparatus on the basis of the acquired channel signal information.

To be more specific, for example the gain control unit 110 acquires channel signal information and channel tuning information corresponding to the signal information by causing the communication unit 102 (or an external communication device, the same is applied below) to transmit an information transmission request to the connected receiving apparatus 200. Moreover, for example, by causing the communication unit 102 to transmit the signal information acquired from the receiving apparatus 200 to the managing apparatus 300, the gain control unit 110 acquires information on EPG corresponding to the signal information from the managing apparatus 300.

The EPG processing unit 112 plays a leading role of performing above-mentioned processing (2) (i.e., EPG processing) and generates EPG on the basis of the information on EPG acquired by the gain control unit 110.

To be more specific, for example, the EPG processing unit 112 creates the frame of EPG on the basis of data to create the frame of EPG acquired from the managing apparatus 300. Subsequently, the information processing apparatus 100 generates EPG by applying the title or content of a program to a corresponding part in the created frame of EPG, on the basis of program information acquired from the managing apparatus 300, for example.

Moreover, the EPG processing unit 112 associates the acquired channel tuning information and each channel in and generated EPG. To be more specific, for example, the EPG processing unit 112 associates channel tuning information and each channel in generated EPG by associating channel signal information, channel tuning information and identification information to identify the channel in generated EPG, like the table illustrated in FIG. 2.

Moreover, whenever channel tuning information corresponding to signal information and signal information is acquired from the receiving apparatus 200 for example, The EPG processing unit 112 associates signal information and channel tuning information. Moreover, whenever information on EPG is acquired from the managing apparatus 300 for example, The EPG processing unit 112 associates signal information, channel tuning information, and the identification information.

The channel tuning control unit 114 plays a leading role of performing the above-mentioned channel tuning control processing and controls channel tuning in the receiving apparatus 200 on the basis of channel tuning information corresponding to a channel selected by an operation with respect to EPG generated by the EPG processing unit 112.

To be more specific, the information processing apparatus 100 specifies channel tuning information corresponding to channel identification information indicated by a channel tuning operation (one example of an operation with respect to EPG) by referring to the table as illustrated in FIG. 2, for example. Also, for example, by performing communication with the receiving apparatus 200 on the basis of the specified channel tuning information and causing the receiving apparatus 200 to select a channel corresponding to the channel tuning information, the information processing apparatus 100 controls channel tuning in the receiving apparatus 200.

The switching unit 116 plays a leading role of performing the above-mentioned switching processing and switches the receiving apparatus 200. For example, the switching unit 116 performs switching to the receiving apparatus 200 selected by a user operation, on the basis of an operation signal corresponding to the user operation with respect to an operation unit (not illustrated) or an external operation device such as a remote controller.

To be more specific, for example, the gain control unit 110 acquires signal information and channel tuning information from a switched receiving apparatus 200, on the basis of a switching signal which indicates the switched receiving apparatus 200 and is transmitted from the switching unit 116. Moreover, for example, the EPG processing unit 112 generates EPG corresponding to the switched receiving apparatus 200 on the basis of the switching signal transmitted from the switching unit 116.

Moreover, for example, the channel tuning control unit 114 controls channel tuning in the switched receiving apparatus 200 on the basis of the switching signal transmitted from the switching unit 116.

For example, the control unit 106 includes the gain control unit 110, the EPG processing unit 112, the channel tuning control unit 114 and the switching unit 116 and thereby performs processing according to the information processing method of the present embodiment in a leading manner.

For example, by the configuration illustrated in FIG. 8, the information processing apparatus 100 performs the processing according to the information processing method of the present embodiment (for example, above-mentioned processing (1) (i.e., acquisition control processing), above-mentioned processing (2) (i.e., EPG processing), the above-mentioned channel tuning control processing and the above-mentioned switching processing).

Therefore, for example, by the configuration illustrated in FIG. 8, the information processing apparatus 100 can improve the of user's convenience and generate more profitable EPG.

Here, the configuration of the information processing apparatus 100 according to the present embodiment is not limited to the configuration illustrated in FIG. 8.

For example, the information processing apparatus 100 according to the present embodiment may not include the channel tuning control unit 114 and/or the switching unit 116. Even in the case of a configuration without the channel tuning control unit 114 and/or the switching unit 116, the information processing apparatus 100 according to the present embodiment can perform above-mentioned processing (1) (i.e., acquisition control processing) and above-mentioned processing (2) (i.e., EPG processing) according to the information processing method of the present embodiment in a leading manner.

Therefore, even in the case of the configuration without the channel tuning control unit 114 and the switching unit 116, the information processing apparatus 100 according to the present embodiment can improve the user's convenience and generate more profitable EPG.

Moreover, for example, the information processing apparatus 100 according to the present embodiment can include one or more of the gain control unit 110, the EPG processing unit 112, the channel tuning control unit 114 and the switching unit 116 illustrated in FIG. 8, separately from the control unit 106 (for example, realize them with individual processing circuits).

Moreover, for example, in a case where the information processing apparatus 100 according to the present embodiment performs communication with an external apparatus such as the receiving apparatus 200 and the managing apparatus 300 through an external communication device, the information processing apparatus 100 may not include the communication unit 102.

Moreover, for example, in a case where the information processing apparatus 100 performs processing by the use of a table (one example of data that associates channel tuning information and each channel in EPG) stored in a recording medium held by an external recording medium or an external apparatus such as a server, the information processing apparatus 100 may not include the memory 104.

### (II) Receiving apparatus 200

FIG. 10 is a block diagram illustrating one example of a configuration of the receiving apparatus 200 according to the present embodiment. For example, the receiving apparatus 200 includes a reception unit 202, a communication unit 204 and a control unit 206.

Moreover, for example, the receiving apparatus 200 may include a ROM (not illustrated), a RAM (not illustrated), a storage unit (not illustrated), an operation unit (not illustrated) that can be operated by the user and a display unit (not illustrated) that displays various screens on a display screen. For example, the receiving apparatus 200 connects the above-mentioned components by a bus as a data transmission path.

Here, the ROM (not illustrated) stores a program used by the control unit 206 and control data such as a calculation parameter. The RAM (not illustrated) temporarily stores a program executed by the control unit 206, and so on.

The storage unit (not illustrated) is a storage unit held by the receiving apparatus 200 and stores various kinds of data such as channel signal information, channel tuning information corresponding to the signal information and an application. Here, as the storage unit (not illustrated), for example, there are a magnetic recording medium such as a hard disk and a nonvolatile memory such as a flash memory. Moreover, the storage unit (not illustrated) may be detachable from the receiving apparatus 200.

Moreover, as the operation unit (not illustrated), for example, there is the operation input device illustrated in above FIG. 9, and, as the display unit (not illustrated), there is the above-mentioned display device illustrated in above FIG. 9.

### (Hardware configuration example of receiving apparatus 200)

For example, in addition to the hardware configuration illustrated in FIG. 9, the receiving apparatus 200 further includes a tuner (not illustrated).

For example, the tuner (not illustrated) plays a role of the reception unit 202 and receives a broadcast signal. Here, as the broadcast signal received by the tuner (not illustrated), for example, there are one or more signals among a signal of terrestrial broadcasting, a signal of satellite broadcasting such as BS (Broadcasting Satellite) broadcasting and CS (Communication Satellite) broadcasting, and a signal of wire broadcasting such as cable television broadcasting.

Here, the hardware configuration of the receiving apparatus 200 according to the present embodiment is not limited to the configuration illustrated in FIG. 9.

For example, in a case where the receiving apparatus 200 performs communication with an external apparatus such as the information processing apparatus 100 through an external communication device connected through the input/output interface 158 or the like, the receiving apparatus 200 may not include the communication interface 164.

Moreover, in the case of receiving a broadcast signal from an external tuner connected through the input/output interface 158 or the like, the receiving apparatus 200 may not include the tuner (not illustrated). In the case of a configuration without the tuner (not illustrated), for example, the input/output interface 158 that receives the broadcast signal from the external tuner plays a role of the reception unit 202.

Moreover, for example, the receiving apparatus 200 can adopt a configuration without the operation device 160 and the display device 162.

Referring to FIG. 10 again, one example of the configuration of the receiving apparatus 200 is described. The reception unit 202 receives a broadcast signal.

Here, as the reception unit 202, for example, there is a tuner (not illustrated). Here, the reception unit 202 is not limited to the above. For example, in a case where the receiving apparatus 200 receives a broadcast signal from an external tuner, the input/ output interface 158 that receive the broadcast signal from the external tuner plays a role of the reception unit 202.

The communication unit 204 is a communication unit held by the receiving apparatus 200 and performs wired/wireless communication with an external unit such as the information processing apparatus 100 through a network (or directly). Moreover, in the communication unit 204, communication is controlled by the control unit 206, for example.

Here, as the communication unit 204, for example, although there are a communication antenna, an RF circuit, a LAN terminal and a transmission/reception circuit, the configuration of the communication unit 204 is not limited to the above. For example, the communication unit 204 can adopt a configuration supporting an arbitrary standard in which it is possible to perform communication with a USB terminal and a transmission/reception circuit, or an arbitrary configuration in which it is possible to perform communication with an external apparatus through a network.

For example, the control unit 206 includes an MPU and plays a role of controlling the whole of the receiving apparatus 200. Moreover, the control unit 206 includes a processing unit 210, for example.

The processing unit 210 generates channel tuning information corresponding to channel signal information based on the broadcast signal received by the reception unit 202. Here, for example, the processing unit 210 may generate channel tuning information depending on an information transmission request received by a communication unit 302 or generate the channel tuning information without depending on the information transmission request.

For example, the processing unit 210 generates a URL in which parameters including the broadcast wave type, signal information and channel name of a channel are assigned to the IP address of the apparatus, as channel tuning information corresponding to the apparatus. For example, as shown in the channel URL illustrated in FIG. 2, it is needless to say that the channel tuning information generated by the processing unit 210 is not limited to the above.

Moreover, for example, in response to the information transmission request received by the communication unit 302, the processing unit 210 causes the communication unit 302 to transmit channel signal information and channel tuning information corresponding to the signal information to the information processing apparatus 100 that transmitted the information transmission request.

For example, by the configuration illustrated in FIG. 10, the receiving apparatus 200 generates the channel tuning information. Moreover, for example, by the configuration illustrated in FIG. 10, the receiving apparatus 200 transmits the channel signal information and the channel tuning information corresponding to the signal information to the information processing apparatus 100 that transmitted the information transmission request.

Therefore, for example, by causing the receiving apparatus 200 to adopt the configuration illustrated in FIG. 10, the processing in the information processing system 1000 is realized as illustrated in FIG. 7, for example. Therefore, by causing the receiving apparatus 200 to adopt the configuration illustrated in FIG. 10, for example, it is possible to realize an information processing system in which it is possible to improve the user's convenience and generate more profitable EPG.

Here, the configuration of the receiving apparatus 200 according to the present embodiment is not limited to the configuration illustrated in FIG. 10.

For example, the receiving apparatus 200 according to the present embodiment can include the processing unit 210 illustrated in FIG. 10, separately from the control unit 206 (for example, realize it with an individual processing circuit).

Moreover, for example, in a case where the receiving apparatus 200 according to the present embodiment performs communication with an external apparatus such as the information processing apparatus 100 through an external communication device, the receiving apparatus 200 according to the present embodiment may not include the communication unit 204.

### (III) Managing apparatus 300

FIG. 11 is a block diagram illustrating one example of a configuration of the managing apparatus 300 according to the present embodiment. For example, the managing apparatus 300 includes the communication unit 302, a storage unit 304 and a control unit 306.

Moreover, for example, the managing apparatus 300 may include a ROM (not illustrated), a RAM (not illustrated), an operation unit (not illustrated) that can be operated by the user and a display unit (not illustrated) that displays various screens on a display screen. For example, the managing apparatus 300 connects the above-mentioned components by a bus as a data transmission path.

Here, the ROM (not illustrated) stores a program used by the control unit 306 and control data such as a calculation parameter. The RAM (not illustrated) temporarily stores a program executed by the control unit 306, and so on.

Moreover, as the operation unit (not illustrated), for example, there is the operation input device illustrated in above FIG. 9, and, as the display unit (not illustrated), there is the above-mentioned display device illustrated in above FIG. 9.

### (Hardware configuration example of managing apparatus 300)

The managing apparatus 300 adopts the hardware configuration illustrated in FIG. 9, for example.

Here, the hardware configuration of the managing apparatus 300 according to the present embodiment is not limited to the configuration illustrated in FIG. 9.

For example, in a case where the managing apparatus 300 performs communication with an external apparatus such as the information processing apparatus 100 through an external communication device connected through the input/output interface 158 or the like, the managing apparatus 300 may not include the communication interface 164.

Moreover, for example, the managing apparatus 300 adopts a configuration without the operation device 160 and the display device 162.

Referring to FIG. 11 again, one example of the configuration of the managing apparatus 300 is described. The communication unit 302 is a communication unit held by the managing apparatus 300 and performs wired/wireless communication with an external apparatus such as the information processing apparatus 100 through a network (or directly). Moreover, in the communication unit 302, communication is controlled by the control unit 306, for example.

Here, as the communication unit 302, for example, although there are a communication antenna, an RF circuit, a LAN terminal and a transmission/reception circuit, the configuration of the communication unit 302 is not limited to the above. For example, the communication unit 302 can adopt a configuration supporting an arbitrary standard in which it is possible to perform communication with a USB terminal and a transmission/reception circuit, or an arbitrary configuration in which it is possible to perform communication with an external apparatus through a network.

The storage unit 304 is a storage unit held by the managing apparatus 300 and stores various kinds of data such as a database in which signal information and information (for example, information on EPG) forming second channel information are associated, a database in which a channel ID (one example of channel identification information) and program information are assigned, and an application. Here, FIG. 11 illustrates an example where the storage unit 304 stores EPG database 320 (one example of a database in which signal information and information (for example, information on EPG) that forms second channel information are associated) and program database 322 (one example of a database in which a channel ID (one example of channel identification information) and program information are associated).

Moreover, as the storage unit 304, for example, there are a magnetic recording medium such as a hard disk and a nonvolatile memory such as a flash memory. Moreover, the storage unit 304 may be detachable from the managing apparatus 300.

The control unit 306 includes an MPU, for example, and plays a role of controlling the whole of the managing apparatus 300. Moreover, the control unit 306 includes the processing unit 310, for example.

The processing unit 310 causes the communication unit 302 to transmit second channel information corresponding to signal information to the information processing apparatus 100 that transmitted the signal information, on the basis of the signal information received by the communication unit 302. To be more specific, for example, with reference to the EPG database 320, the processing unit 310 specifies information that forms the second channel information corresponding to the signal information that matches the received signal information. Subsequently, for example, the processing unit 310 causes the communication unit 302 to transmit the second channel information including the specified information.

Moreover, for example, on the basis of a program information transmission request received by the communication unit 302, the processing unit 310 causes the communication unit 302 to transmit program information corresponding to the program information transmission request to the information processing apparatus 100 that transmitted the program information transmission request. To be more specific, for example, with reference to the program database 322, the processing unit 310 specifies program information corresponding to a channel ID that matches a channel ID (one example of channel identification information) included in the received program information transmission request. Subsequently, for example, the processing unit 310 causes the communication unit 302 to transmit the specified program information.

For example, by the configuration illustrated in FIG. 11, the managing apparatus 300 transmits information (data) corresponding to the signal information or program information transmission request received by the communication unit 302 to the information processing apparatus 100 that transmitted the signal information or the program information transmission request.

Therefore, for example, by adopting the configuration illustrated in FIG. 11 by the managing apparatus 300, the processing in the information processing system 1000 as illustrated in FIG. 7 is realized. Therefore, for example, by adopting the configuration illustrated in FIG. 11 by the managing apparatus 300, an information processing system is realized in which it is possible to improve the user's convenience and generate more profitable EPG.

Here, the configuration of the managing apparatus 300 according to the present embodiment is not limited to the configuration illustrated in FIG. 11.

For example, the managing apparatus 300 according to the present embodiment can include the processing unit 310 illustrated in FIG. 11, separately from the control unit 306 (for example, realize it with an individual processing circuit).

Moreover, for example, in a case where the managing apparatus 300 according to the present embodiment performs communication with an external apparatus such as the information processing apparatus 100 through an external communication device, the managing apparatus 300 according to the present embodiment may not include the communication unit 302.

Although the present embodiment has been described above using the information processing apparatus, the present embodiment is not limited to this mode. For example, the present embodiment is applicable to various devices such as a tablet type device, communication apparatuses including a mobile phone and smart phone, an image/ music player (or image/music recorder/player), a game machine, computers including a PC (Personal Computer) and a so-called mobile device. Moreover, for example, the present embodiment is also applicable to a processing IC (Integrated Circuit) that can be incorporated in the above-mentioned device.

Moreover, although the present embodiment has been described using the receiving apparatus, the present embodiment is not limited to this mode. For example, the present embodiment is applicable to various devices such as a television set, a tuner and computers including a PC. Moreover, the present embodiment is also applicable to a processing IC that can be incorporated in the above-mentioned device, for example.

Moreover, although the present embodiment has been described using the management apparatus, the present embodiment is not limited to this mode. For example, the present embodiment is applicable to various devices such as computers including a PC and a server. Moreover, the present embodiment is also applicable to a processing IC that can be incorporated in the above-mentioned device, for example.

### (Program according to the present embodiment)

### (i) Program according to information processing apparatus according to the present embodiment

By executing a program that causes a computer to function as the information processing apparatus according to the present embodiment in the computer (for example, a program that can execute processing according to the information processing method of the present embodiment, such as "above-mentioned processing (1) (i.e., acquisition control processing) and above-mentioned processing (2) (i.e., EPG processing)", "above-mentioned processing (1) (i.e., acquisition control processing), above-mentioned processing (2) (i.e., EPG processing) and the above-mentioned channel tuning control processing", and "above-mentioned processing (1) (i.e., acquisition control processing), above-mentioned processing (2) (i.e., EPG processing), the above-mentioned channel tuning control processing and the above-mentioned switching processing"), it is possible to improve the user's convenience and generate more profitable EPG.

### (ii) Program according to receiving apparatus of the present embodiment

By executing a program that causes a computer to function as the receiving apparatus according to the present embodiment in the computer (for example, a program that causes it to function as the processing unit 210 illustrated in FIG. 10), it is possible to realize an information processing system in which it is possible to improve the user's convenience and generate more profitable EPG.

### (iii) Program according to management apparatus according to the present embodiment

By executing a program that causes a computer to function as the managing apparatus according to the present embodiment in the computer (for example, a program that causes it to function as the processing unit 310 illustrated in FIG. 11), it is possible to realize an information processing system in which it is possible to improve the user's convenience and generate more profitable EPG.

Although the preferred embodiment of the present disclosure has been described in detail with reference to the accompanying drawings, the technical scope of the present disclosure is not limited to the example. It is clear that a person having general knowledge in the technical field of the present disclosure can think of various modification examples and alternation examples within a range of the technical idea recited in the claims, and it is naturally understood that these belong to the technical scope of the present disclosure too.

For example, although the programs (computer programs) that causes a computer to function as the information processing apparatus according to the present embodiment, the receiving apparatus according to the present embodiment and the management apparatus according to the present embodiment have been provided above, the present embodiment can further provide a recording medium that stores the above-mentioned programs and a recording medium that stores two or more of the above-mentioned programs together.

The above-mentioned configuration is one example of the present embodiment, and it naturally belongs to the technical scope of the present disclosure.

### Reference Signs List

100 information processing apparatus
102, 204, 302 communication unit
104, 304 storage unit
106, 206, 306 control unit
110 gain control unit
112 EPG processing unit
114 channel tuning control unit
116 switching unit
200, 200A, 200B receiving apparatus
202 reception unit
210, 310 processing unit
300 managing apparatus
400 network
1000 information processing system

## Claims

1. An information processing apparatus (100) comprising:
circuitry configured to
acquire first channel information corresponding to broadcast content from a first television set (200A), said first channel information including first channel tuning information, said first channel tuning information being generated by the first television set (200A) and including an IP address of the first television set (200A), a broadcast wave type, and a channel name;
acquire first program guide information from a managing apparatus (300) based on the first channel information; and
generate a first program guide based on the first channel information and the first program guide information,
control switching from the first television set (200A) to a second television set (200B);
acquire second channel information corresponding to broadcast content from the second television set (200B), said second channel information including second channel tuning information, said second channel tuning information being generated by the second television set (200B) and including an IP address of the second television set (200B), a broadcast wave type, and a channel name;
acquire second program guide information from the managing apparatus (300) based on the second channel information; and
generate a second program guide based on the second channel information and the second program guide information.

2. The information processing apparatus of claim 1, wherein the circuitry is configured to receive channel tuning information corresponding to the broadcast content from the respective television set (200).

3. The information processing apparatus of claim 2, wherein the circuitry is configured to generate the respective program guide based on the corresponding channel information, program guide information and channel tuning information; and/or to acquire channel identification information corresponding to the broadcast content from the television set (200).

4. The information processing apparatus of claim 3, wherein the circuitry is configured to generate the respective program guide based on the corresponding channel information, program guide information, channel tuning information and channel identification information.

5. The information processing apparatus of claim 3 or 4, wherein the circuitry is configured to generate a table associating, for each channel of the broadcast content, the channel information, the channel tuning information and the channel identification information, in particular to update the table based on channel information, channel tuning information and channel identification information corresponding to a new channel received from the respective television set (200) and/or to generate the respective program guide based on the program guide information and information included in the table.

6. The information processing apparatus of any preceding claim, wherein the circuitry is configured to control transmitting the respective channel information to the managing apparatus (300), in particular to receive the respective program guide information from the managing apparatus (300) in response to transmitting the respective channel information to the managing apparatus (300).

7. The information processing apparatus of any preceding claim, wherein the program guide information includes data corresponding to a display frame of the program guide.

8. The information processing apparatus of any preceding claim, wherein the circuitry is configured to generate a frame for the respective program guide based on the respective program guide information.

9. The information processing apparatus of claim 8, wherein the circuitry is configured to:
transmit a request for additional program guide information to the managing apparatus (300) upon generating the frame for the program guide; and
acquire the additional program guide information from the managing apparatus (300) in response to transmitting the request for the additional program guide information.

10. The information processing apparatus of claim 9, wherein the circuitry is configured to populate the frame of the program guide based on the additional program guide information received from the managing apparatus (300).

11. The information processing apparatus of any preceding claim, wherein the circuitry is configured to control a display to display the program guide, in particular to receive a channel switching operation at a user interface corresponding to the display displaying the program guide.

12. The information processing apparatus of claim 11, wherein the circuitry is configured to generate a channel switching command corresponding to the received channel switching operation and control transmitting the channel switching command to the receiving apparatus (200).

13. A method performed by an information processing apparatus, the method comprising:
acquiring first channel information corresponding to broadcast content from a first television set (200A), said first channel information including first channel tuning information, said first channel tuning information being generated by the first television set (200A) and including an IP address of the first television set (200A), a broadcast wave type, and a channel name;
acquiring first program guide information from a managing apparatus (300) based on the acquired first channel information; and
generating a first program guide based on the first channel information and the first program guide information,
controlling switching from the first television set (200A) to a second television set (200B);
acquiring second channel information corresponding to broadcast content from the second television set (200B), said second channel information including second channel tuning information, said second channel tuning information being generated by the second television set (200B) and including an IP address of the second television set (200B), a broadcast wave type, and a channel name;
acquiring second program guide information from the managing apparatus (300) based on the second channel information; and
generating a second program guide based on the second channel information and the second program guide information.

14. A non-transitory computer-readable medium including computer-program instructions, which when executed by an information processing apparatus (100), cause the information processing apparatus (100) to:
acquire first channel information corresponding to broadcast content from a first television set (200A), said first channel information including first channel tuning information, said first channel tuning information being generated by the first television set (200A) and including an IP address of the first television set (200A), a broadcast wave type, and a channel name;
acquire first program guide information from a managing apparatus (300) based on the acquired first channel information; and
generate a first program guide based on the first channel information and the first program guide information,
control switching from the first television set (200A) to a second television set (200B);
acquire second channel information corresponding to broadcast content from the second television set (200B), said second channel information including second channel tuning information, said second channel tuning information being generated by the second television set (200B) and including an IP address of the second television set (200B), a broadcast wave type, and a channel name;
acquire second program guide information from the managing apparatus (300) based on the second channel information; and
generate a second program guide based on the second channel information and the second program guide information.

## Patentansprüche

1. Informationsverarbeitungsvorrichtung (100), die aufweist:
eine Schaltungsanordnung, die eingerichtet ist zum
Erlangen einer ersten Kanalinformation entsprechend einem Sendungsinhalt von einem ersten Fernsehgerät (200A), wobei die erste Kanalinformation eine erste Kanalabstimminformation umfasst, wobei die erste Kanalabstimminformation durch das erste Fernsehgerät (200A) erzeugt wird und eine IP-Adresse des ersten Fernsehgeräts (200A), einen Sendungswellentyp und einen Kanalnamen umfasst;
Erlangen einer ersten Programmführungsinformation von einer Verwaltungsvorrichtung (300) basierend auf der ersten Kanalinformation; und
Erzeugen eines ersten Programmführers basierend auf der ersten Kanalinformation und der ersten Programmführungsinformation,
Steuern eines Umschaltens vom ersten Fernsehgerät (200A) auf ein zweites Fernsehgerät (200B);
Erlangen einer zweiten Kanalinformation entsprechend einem Sendungsinhalt von dem zweiten Fernsehgerät (200B), wobei die zweite Kanalinformation eine zweite Kanalabstimminformation umfasst, wobei die zweite Kanalabstimminformation durch das zweite Fernsehgerät (200B) erzeugt wird und eine IP-Adresse des zweiten Fernsehgeräts (200B), einen Sendungswellentyp und einen Kanalnamen umfasst;
Erlangen einer zweiten Programmführungsinformation von der Verwaltungsvorrichtung (300) basierend auf der zweiten Kanalinformation; und
Erzeugen eines zweiten Programmführers basierend auf der zweiten Kanalinformation und der zweiten Programmführungsinformation.

2. Informationsverarbeitungsvorrichtung nach Anspruch 1, wobei die Schaltungsanordnung zum Empfangen einer Kanalabstimminformation entsprechend dem Sendungsinhalt von dem jeweiligen Fernsehgerät (200) eingerichtet ist.

3. Informationsverarbeitungsvorrichtung nach Anspruch 2, wobei die Schaltungsanordnung eingerichtet ist, den jeweiligen Programmführer basierend auf der entsprechenden Kanalinformation, der Programmführungsinformation und der Kanalabstimminformation zu erzeugen; und/oder eine Kanalidentifizierungsinformation entsprechend dem Sendungsinhalt von dem Fernsehgerät (200) zu erlangen.

4. Informationsverarbeitungsvorrichtung nach Anspruch 3, wobei die Schaltungsanordnung eingerichtet ist, den jeweiligen Programmführer basierend auf der entsprechenden Kanalinformation, der Programmführungsinformation, der Kanalabstimminformation und der Kanalidentifizierungsinformation zu erzeugen.

5. Informationsverarbeitungsvorrichtung nach Anspruch 3 oder 4, wobei die Schaltungsanordnung eingerichtet ist, eine Tabelle zu erzeugen, die für jeden Kanal des Sendungsinhalts die Kanalinformation, die Kanalabstimminformation und die Kanalidentifizierungsinformation verknüpft, insbesondere um die Tabelle basierend auf einer Kanalinformation, einer Kanalabstimminformation und einer Kanalidentifizierungsinformation entsprechend einem neuen Kanal zu aktualisieren, der von dem jeweiligen Fernsehgerät (200) empfangen wird, und/oder um den jeweiligen Programmführer basierend auf der Programmführungsinformation und einer Information zu erzeugen, die von der Tabelle umfasst ist.

6. Informationsverarbeitungsvorrichtung nach einem der vorhergehenden Ansprüche, wobei die Schaltungsanordnung eingerichtet ist, ein Übertragen der jeweiligen Kanalinformation an die Verwaltungsvorrichtung (300) zu steuern, insbesondere die jeweilige Programmführungsinformation von der Verwaltungsvorrichtung (300) in Reaktion auf ein Übertragen der jeweiligen Kanalinformation an die Verwaltungsvorrichtung (300) zu empfangen.

7. Informationsverarbeitungsvorrichtung nach einem der vorhergehenden Ansprüche, wobei die Programmführungsinformation Daten umfasst, die einem Anzeigerahmen des Programmführers entsprechen.

8. Informationsverarbeitungsvorrichtung nach einem der vorhergehenden Ansprüche, wobei die Schaltungsanordnung eingerichtet ist, einen Rahmen für den jeweiligen Programmführer basierend auf der jeweiligen Programmführungsinformation zu erzeugen.

9. Informationsverarbeitungsvorrichtung nach Anspruch 8, wobei die Schaltungsanordnung eingerichtet ist:
eine Anfrage für eine zusätzliche Programmführungsinformation an die Verwaltungsvorrichtung (300) beim Erzeugen des Rahmens für den Programmführer zu übertragen; und
die zusätzliche Programmführungsinformation von der Verwaltungsvorrichtung (300) in Reaktion auf ein Übertragen der Anfrage nach der zusätzlichen Programmführungsinformation zu erlangen.

10. Informationsverarbeitungsvorrichtung nach Anspruch 9, wobei die Schaltungsanordnung eingerichtet ist, den Rahmen des Programmführers basierend auf der zusätzlichen Programmführungsinformation zu bevölkern, die von der Verwaltungsvorrichtung (300) empfangen wird.

11. Informationsverarbeitungsvorrichtung nach einem der vorhergehenden Ansprüche, wobei die Schaltungsanordnung eingerichtet ist, eine Anzeige zum Anzeigen des Programmführers zu steuern, insbesondere einen Kanalumschaltbetrieb bei einer Nutzerschnittstelle entsprechend einer Anzeige zu empfangen, die den Programmführer anzeigt.

12. Informationsverarbeitungsvorrichtung nach Anspruch 11, wobei die Schaltungsanordnung eingerichtet ist, einen Kanalumschaltbefehl entsprechend dem empfangenen Kanalumschaltbetrieb zu erzeugen und ein Übertragen des Kanalumschaltbefehls an die empfangende Vorrichtung (200) zu steuern.

13. Verfahren, das durch eine Informationsverarbeitungsvorrichtung durchgeführt wird, wobei das Verfahren aufweist:
Erlangen einer ersten Kanalinformation entsprechend einem Sendungsinhalt von einem ersten Fernsehgerät (200A), wobei die erste Kanalinformation eine erste Kanalabstimminformation umfasst, wobei die erste Kanalabstimminformation durch das erste Fernsehgerät (200A) erzeugt wird und eine IP-Adresse des ersten Fernsehgeräts (200A), einen Sendungswellentyp und einen Kanalnamen umfasst;
Erlangen einer ersten Programmführungsinformation von einer Verwaltungsvorrichtung (300) basierend auf der erlangten ersten Kanalinformation; und
Erzeugen eines ersten Programmführers basierend auf der ersten Kanalinformation und der ersten Programmführungsinformation,
Steuern eines Umschaltens vom ersten Fernsehgerät (200A) auf ein zweites Fernsehgerät (200B);
Erlangen einer zweiten Kanalinformation entsprechend einem Sendungsinhalt von dem zweiten Fernsehgerät (200B), wobei die zweite Kanalinformation eine zweite Kanalabstimminformation umfasst, wobei die zweite Kanalabstimminformation durch das zweite Fernsehgerät (200B) erzeugt wird und eine IP-Adresse des zweiten Fernsehgeräts (200B), einen Sendungswellentyp und einen Kanalnamen umfasst;
Erlangen einer zweiten Programmführungsinformation von der Verwaltungsvorrichtung (300) basierend auf der zweiten Kanalinformation; und
Erzeugen eines zweiten Programmführers basierend auf der zweiten Kanalinformation und der zweiten Programmführungsinformation.

14. Nicht-flüchtiges computerlesbares Medium einschließlich Computerprogrammanweisungen, die, wenn sie durch eine Informationsverarbeitungsvorrichtung (100) ausgeführt werden, die Informationsverarbeitungsvorrichtung (100) dazu veranlassen:
eine erste Kanalinformation entsprechend einem Sendungsinhalt von einem ersten Fernsehgerät (200A) zu erlangen, wobei die erste Kanalinformation eine erste Kanalabstimminformation umfasst, wobei die erste Kanalabstimminformation durch das erste Fernsehgerät (200A) erzeugt wird und eine IP-Adresse des ersten Fernsehgeräts (200A), einen ersten Sendungswellentyp und einen Kanalnamen umfasst;
eine erste Programmführungsinformation von einer Verwaltungsvorrichtung (300) basierend auf der erlangten ersten Kanalinformation zu erlangen; und
einen ersten Programmführer basierend auf der ersten Kanalinformation und der ersten Programmführungsinformation zu erzeugen,
ein Umschalten vom ersten Fernsehgerät (200A) auf ein zweites Fernsehgerät (200B) zu steuern;
eine zweite Kanalinformation entsprechend einem Sendungsinhalt von dem zweiten Fernsehgerät (200B) zu erlangen, wobei die zweite Kanalinformation eine zweite Kanalabstimminformation umfasst, wobei die zweite Kanalabstimminformation durch das zweite Fernsehgerät (200B) erzeugt wird und eine IP-Adresse des zweiten Fernsehgeräts (200B), einen Sendungswellentyp und einen Kanalnamen umfasst;
eine zweite Programmführungsinformation von der Verwaltungsvorrichtung (300) basierend auf der zweiten Kanalinformation zu erlangen; und
einen zweiten Programmführer basierend auf der zweiten Kanalinformation und der zweiten Programmführungsinformation zu erzeugen.

## Revendications

1. Appareil de traitement d'informations (100) comprenant :
des circuits configurés pour
acquérir des premières informations de canal correspondant à un contenu de diffusion auprès d'un premier poste de télévision (200A), lesdites premières informations de canal comprenant des premières informations de syntonisation de canal, lesdites premières informations de syntonisation de canal étant générées par le premier poste de télévision (200A) et comprenant une adresse IP du premier poste de télévision (200A), un type d'onde de diffusion et un nom de canal ;
acquérir des premières informations de guide des programmes auprès d'un appareil de gestion (300) sur la base des premières informations de canal ; et
générer un premier guide des programmes sur la base des premières informations de canal et des premières informations de guide des programmes,
contrôler le passage du premier poste de télévision (200A) au deuxième poste de télévision (200B) ;
acquérir des deuxièmes informations de canal correspondant à un contenu de diffusion auprès du deuxième poste de télévision (200B), lesdites deuxièmes informations de canal comprenant des deuxièmes informations de syntonisation de canal, lesdites deuxièmes informations de syntonisation de canal étant générées par le deuxième poste de télévision (200B) et comprenant une adresse IP du deuxième poste de télévision (200B), un type d'onde de diffusion et un nom de canal ;
acquérir des deuxièmes informations de guide des programmes auprès de l'appareil de gestion (300) sur la base des deuxièmes informations de canal ; et
générer un deuxième guide des programmes sur la base des deuxièmes informations de canal et des deuxièmes informations de guide des programmes.

2. Appareil de traitement d'informations selon la revendication 1, dans lequel les circuits sont configurés pour recevoir des informations de syntonisation de canal correspondant au contenu diffusé depuis le poste de télévision respectif (200).

3. Appareil de traitement d'informations selon la revendication 2, dans lequel les circuits sont configurés pour générer le guide des programmes respectif sur la base des informations de canal correspondantes, des informations de guide des programmes et des informations de syntonisation de canal ; et/ou pour acquérir des informations d'identification de canal correspondant au contenu diffusé depuis le poste de télévision (200).

4. Appareil de traitement d'informations selon la revendication 3, dans lequel les circuits sont configurés pour générer le guide des programmes respectif sur la base des informations de canal correspondantes, des informations de guide des programmes, des informations de syntonisation de canal et des informations d'identification de canal.

5. Appareil de traitement d'informations selon la revendication 3 ou la revendication 4, dans lequel les circuits sont configurés pour générer un tableau associant, pour chaque canal du contenu diffusé, les informations de canal, les informations de syntonisation de canal et les informations d'identification de canal, en particulier pour mettre à jour le tableau sur la base des informations de canal, des informations de syntonisation de canal et des informations d'identification de canal correspondant à un nouveau canal reçu du poste de télévision respectif (200) et/ou pour générer le guide des programmes respectif sur la base des informations du guide des programmes et des informations incluses dans le tableau.

6. Appareil de traitement d'informations selon l'une quelconque des revendications précédentes, dans lequel les circuits sont configurés pour contrôler la transmission des informations de canal respectives à l'appareil de gestion (300), en particulier pour recevoir les informations de guide des programmes respectives de l'appareil de gestion (300) en réponse à la transmission des informations de canal respectives à l'appareil de gestion (300).

7. Appareil de traitement d'informations selon l'une quelconque des revendications précédentes, dans lequel les informations de guide des programmes contiennent des données correspondant à un cadre d'affichage du guide des programmes.

8. Appareil de traitement d'informations selon l'une quelconque des revendications précédentes, dans lequel les circuits sont configurés pour générer un cadre pour le guide des programmes respectif sur la base des informations de guide des programmes respectives.

9. Appareil de traitement d'informations selon la revendication 8, dans lequel les circuits sont configurés pour :
transmettre une demande d'informations supplémentaires de guide des programmes à l'appareil de gestion (300) lors de la génération du cadre pour le guide des programmes ; et
acquérir les informations supplémentaires du guide des programmes auprès de l'appareil de gestion (300) en réponse à la transmission de la demande d'informations supplémentaires de guide des programmes.

10. Appareil de traitement d'informations selon la revendication 9, dans lequel les circuits sont configurés pour remplir le cadre du guide des programmes sur la base des informations supplémentaires du guide des programmes reçues de l'appareil de gestion (300).

11. Appareil de traitement d'informations selon l'une quelconque des revendications précédentes, dans lequel les circuits sont configurés pour commander un affichage pour afficher le guide des programmes, en particulier pour recevoir une opération de changement de canal sur une interface utilisateur correspondant à l'affichage affichant le guide des programmes.

12. Appareil de traitement d'informations selon la revendication 11, dans lequel les circuits sont configurés pour générer une commande de changement de canal correspondant à l'opération de changement de canal reçue et pour contrôler la transmission de la commande de changement de canal à l'appareil récepteur (200).

13. Procédé exécuté par un appareil de traitement d'informations, le procédé comprenant les étapes suivantes :
acquérir des premières informations de canal correspondant à un contenu de diffusion auprès d'un premier poste de télévision (200A), lesdites premières informations de canal comprenant des premières informations de syntonisation de canal, lesdites premières informations de syntonisation de canal étant générées par le premier poste de télévision (200A) et comprenant une adresse IP du premier poste de télévision (200A), un type d'onde de diffusion et un nom de canal ;
acquérir des premières informations de guide des programmes auprès d'un appareil de gestion (300) sur la base des premières informations de canal ; et
générer un premier guide des programmes sur la base des premières informations de canal et des premières informations de guide des programmes,
contrôler le passage du premier poste de télévision (200A) à un deuxième poste de télévision (200B) ;
acquérir des deuxièmes informations de canal correspondant à un contenu de diffusion auprès du deuxième poste de télévision (200B), lesdites deuxièmes informations de canal comprenant des deuxièmes informations de syntonisation de canal, lesdites deuxièmes informations de syntonisation de canal étant générées par le deuxième poste de télévision (200B) et comprenant une adresse IP du deuxième poste de télévision (200B), un type d'onde de diffusion et un nom de canal ;
acquérir des deuxièmes informations de guide des programmes auprès de l'appareil de gestion (300) sur la base des deuxièmes informations de canal ; et
générer un deuxième guide des programmes sur la base des deuxièmes informations de canal et des deuxièmes informations de guide des programmes.

14. Support non transitoire lisible par ordinateur comprenant des instructions de programme informatique qui, lorsqu'elles sont exécutées par un appareil de traitement d'informations (100), amènent l'appareil de traitement d'informations (100) à :
acquérir des premières informations de canal correspondant à un contenu de diffusion auprès d'un premier poste de télévision (200A), lesdites premières informations de canal comprenant des premières informations de syntonisation de canal, lesdites premières informations de syntonisation de canal étant générées par le premier poste de télévision (200A) et comprenant une adresse IP du premier poste de télévision (200A), un type d'onde de diffusion et un nom de canal ;
acquérir des premières informations de guide des programmes auprès d'un appareil de gestion (300) sur la base des premières informations de canal ; et
générer un premier guide des programmes sur la base des premières informations de canal et des premières informations de guide des programmes,
contrôler le passage du premier poste de télévision (200A) au deuxième poste de télévision (200B) ;
acquérir des deuxièmes informations de canal correspondant à un contenu de diffusion auprès du deuxième poste de télévision (200B), lesdites deuxièmes informations de canal comprenant des deuxièmes informations de syntonisation de canal, lesdites deuxièmes informations de syntonisation de canal étant générées par le deuxième poste de télévision (200B) et comprenant une adresse IP du deuxième poste de télévision (200B), un type d'onde de diffusion et un nom de canal ;
acquérir des deuxièmes informations de guide des programmes auprès de l'appareil de gestion (300) sur la base des deuxièmes informations de canal ; et
générer un deuxième guide des programmes sur la base des deuxièmes informations de canal et des deuxièmes informations de guide des programmes.
